# FASCICULE DE BREVET EUROPEEN

(11) **EP 2 835 667 B1**
(45) Date de publication et mention de la délivrance du brevet: **27.01.2021**
(21) Numéro de dépôt: 14179933.8
(22) Date de dépôt: 05.08.2014
(51) Int. Cl.: G01V 3/15

(54) **Détecteur portatif de métal perfectionné**
Perfektionierter tragbarer Metalldetektor
Improved portable metal detector

(30) Priorité: 05.08.2013 FR 1357790
(43) Date de publication de la demande: 11.02.2015
(73) Titulaire: Costruzioni Elettroniche Industriali Automatismi S.p.A. C.E.I.A. S.P.A., 52041 Civitella in Val di Chiana Arezzo (IT)
(72) Inventeur: Manneschi, Alessandro, I-52100 AREZZO (IT)
(74) Mandataire: Regimbeau

(56) Documents cités:
- WO-A1-2011/116473
- WO-A1-2012/097416
- US-A1- 2010 186 504

## Description

### DOMAINE DE L'INVENTION

La présente invention concerne le domaine des détecteurs de métaux portatifs adaptés pour la détection d'articles métalliques dangereux portés par des individus, par exemple lors de l'accès à une salle d'embarquement dans un aéroport, ou tout autre lieu similaire d'accès contrôlé.

### ETAT DE L'ART

On a déjà proposé de nombreux détecteurs de métaux portatifs adaptés pour la détection d'articles métalliques dangereux portés par des individus.

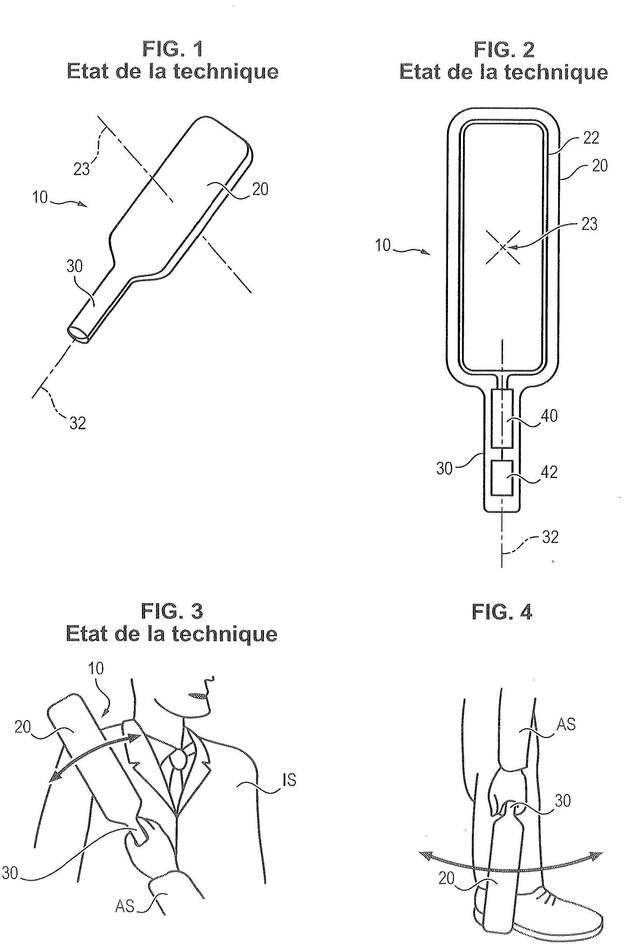

On a illustré à titre d'exemple non limitatif sur la figure 1 annexée, la structure générale de tels capteurs connus.

Comme on le voit sur les figures 1 et 2 annexées, les capteurs 10 connus comprennent généralement un boitier 20 prolongé par une poignée 30 de préhension et manipulation.

Le boitier 20 contient un bobinage électrique 22 sous forme d'une boucle centrée autour d'un axe 23 qui s'étend perpendiculairement à la direction longitudinale 32 de la poignée 30. Le bobinage 22 est associé à un processeur 40 et une alimentation électrique 42.

Le processeur 40 est adapté pour alternativement a) alimenter le bobinage 22, formant bobinage émetteur, par une tension électrique produisant un champ magnétique et b) détecter, le bobinage 22 formant alors bobinage récepteur, les perturbations du champ magnétique résultant de pièces métalliques placées dans l'environnement du détecteur.

Les capteurs connus peuvent faire l'objet de nombreux modes de réalisation notamment quant à la géométrie du bobinage, la nature de la tension électrique appliquée au bobinage (le plus souvent une tension électrique alternative de fréquence élevée, et préférentiellement successivement un balayage en fréquence), et la configuration du bobinage 22 (on peut prévoir un bobinage unique utilisé alternativement et séquentiellement en émetteur lorsqu'il est alimenté pour générer un champ magnétique et en récepteur lorsqu'il est utilisé pour détecter les perturbations dues à l'environnement ou au moins deux bobinages distincts formant respectivement émetteur et récepteur).

Comme on l'a illustré schématiquement sur la figure 3 annexée, les détecteurs 10 de métaux portatifs adaptés pour la détection d'articles métalliques dangereux portés par un individu, sont utilisés le plus souvent par un agent de sécurité AS en balayant le corps de l'individu suspect IS, par exemple dans les aéroports au niveau de l'accès à la salle d'embarquement, après passage d'un portique détecteur de métaux ayant signalé la présence possible d'un objet métallique sur un individu suspect IS.

Le document WO2011/116473 décrit un appareil pour la détection de présence de substances illicites.

Le document US 2010/186504 décrit un détecteur de métal comprenant des moyens de détection de changement de direction afin de réduire le risque de superposition de trajectoire lors du balayage d'un objet examiné.

Le document WO 2012/097416 décrit un détecteur de métal comprenant des moyens de détection de position par rapport à un système de référence de localisation.

### OBJECTIF GENERAL DE L'INVENTION

Partant du constat qu'un tel détecteur classique est très sensible à l'environnement, notamment au ferraillage du béton formant le plancher porteur, lorsqu'il est utilisé au niveau des pieds d'un individu suspect, pour vérifier que cet individu ne dissimule pas un objet dangereux, par exemple un couteau, dans ses chaussures ou chaussettes, comme schématisé sur la figure 4 annexée, la présente invention a maintenant pour but de proposer des moyens qui permettent d'éliminer cet inconvénient.

Ce but est atteint selon l'invention grâce à un détecteur de métaux portatif tel que défini en revendication 1 annexée.

### DESCRIPTIFDES FIGURES

D'autres caractéristiques, buts et avantages de la présente invention apparaîtront à la lecture de la description détaillée qui va suivre et au regard de dessins annexés donnés à titre d'exemples non limitatifs et sur lesquels :
- les figures 1 à 4 précédemment évoquées représentent schématiquement un détecteur portatif connu et son utilisation,
- la figure 5 représente schématiquement un exemple non limitatif d'un détecteur portatif conforme à la présente invention, et
- la figure 6 représente schématiquement une variante de réalisation du bobinage conforme à la présente invention.

### DESCRIPTION DETAILLEE

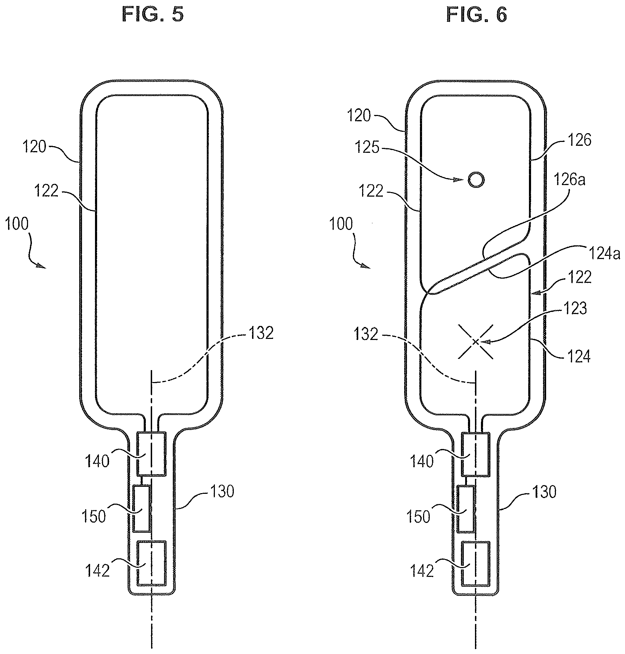

On a représenté schématiquement sur la figure 5 annexée un capteur 100 conforme à la présente invention comprenant un boitier 120 prolongé par une poignée 130 de préhension et manipulation qui s'étend selon un axe longitudinal 132.

Le boitier 120 contient un bobinage électrique 122.

Le bobinage 122 est associé à un processeur 140 et une alimentation électrique 142.

Le processeur 140 est adapté pour alternativement a) alimenter le bobinage 122, formant bobinage émetteur, par une tension électrique produisant un champ magnétique et b) détecter, le bobinage 122 formant alors bobinage récepteur, les perturbations du champ magnétique résultant de pièces métalliques placées dans l'environnement du détecteur.

Le bobinage 122 est de préférence situé dans le plan médian du boitier 120 situé dans le prolongement de l'axe 132 de la poignée 130, et centré autour d'un axe 123 qui s'étendent perpendiculairement à la direction longitudinale 132 de la poignée 130.

Le fonctionnement du processeur 140 pour alimenter le bobinage 122 et successivement opérer la détection, est classique en soi et ne sera donc pas décrit plus en détail par la suite.

Comme indiqué précédemment selon la présente invention, le détecteur comprend en outre un capteur 150, tel qu'un accéléromètre trois axes, permettant de détecter une orientation du détecteur en position verticale de la poignée 130 et qui lorsque le détecteur est dans cette position verticale, active seulement un mode de détection dynamique du bobinage 122, alors que lorsque le détecteur est dans une autre position, il active un mode de fonctionnement statique et dynamique du bobinage 122.

On entend par « orientation du détecteur en position verticale de la poignée 130 » une orientation au moins sensiblement verticale, par exemple à 15° près de la direction longitudinale 132 de la poignée 130.

Lorsque le fonctionnement dynamique seul du bobinage 122 est activé, le processeur ignore les perturbations détectées qui restent constantes sur une plage de temps défini, que le détecteur soit maintenu dans une position constante ou qu'il soit déplacé. Cette disposition conforme à la présente invention permet d'ignorer les perturbations dues au ferraillage du sol support, tout en permettant de détecter un objet métallique porté au niveau du sol par un individu, par exemple un couteau, lorsque le détecteur est déplacé au niveau des pieds d'un individu.

En revanche lorsque le fonctionnement dynamique et statique du bobinage 122 est activé, le processeur 140 prend en compte l'ensemble des perturbations détectées, le détecteur étant alors considéré comme éloigné du sol.

Les capteurs de position formés d'un accéléromètre trois axes sont connus en soi. Ils ne seront donc pas décrits plus en détail par la suite.

Bien entendu la présente invention n'est pas limitée aux modes de réalisation qui viennent d'être décrits, mais s'étend à toutes variantes conformes à son esprit.

En particulier la géométrie du bobinage 122 peut faire l'objet de nombreuses variantes de réalisation.

On a ainsi illustré sur la figure 6 une variante de réalisation selon laquelle le bobinage 122 comprend un bobinage multipolaire en 8.

Ce bobinage122 multipolaire comprend deux boucles élémentaires 124 et 126 placées électriquement en série et enroulées dans des sens opposés de sorte que les perturbations identiques provoquées simultanément sur chaque bobine élémentaire, se compensent et s'annulent en sortie du bobinage 122. Les boucles 124 et 126 sont centrées autour d'axes respectifs 123, 125.

Le nombre de spires des deux boucles élémentaire 124 et 126 est de préférence identique. De même les surfaces des deux boucles élémentaires 124 et 126 sont de préférence identiques.

De préférence comme on le voit sur la figure 6 annexée, les brins adjacents 124a, 126a des deux boucles élémentaires 124 et 126 du bobinage 122, situés en partie médiane du bobinage en 8, ne s'étendent pas orthogonalement à la direction longitudinale 132 de la poignée 130, mais sont inclinés par rapport à cette direction, afin de ne pas créer une zone médiane neutre sur le plan magnétique au niveau de laquelle un objet métallique ne serait pas détecté. Grâce à l'inclinaison de ces brins 124a et 126a, l'on garantit en effet qu'un objet placé à proximité du milieu du bobinage 122, coupe des lignes de champ des bobines élémentaires 124, 126 lorsque le détecteur est déplacé par balayage dans un mouvement de pivotement alternatif centré autour d'un axe globalement centré sur le poignet de l'utilisateur et orthogonal à la direction 132.

Dans un mode de réalisation, le bobinage 122 ou transducteur inductif est formé d'un simple bobinage constituant émetteur et récepteur.

Dans un autre mode de réalisation, le transducteur 122 est formé de deux bobinages formant respectivement, et le cas échéant alternativement, émetteur et récepteur.

Dans tous les cas, les bobinages comprennent de préférence plusieurs boucles en série de sens inversés permettant de neutraliser les effets de parasites externes.

Par ailleurs, le transducteur inductif 122 peut avantageusement comprendre des bobinages décalés entre eux, tant au niveau de l'émission que de la réception, pour limiter l'inductance mutuelle générée par les bobinages du transducteur inductif.

Bien entendu le nombre de bobinages émetteurs et le nombre de bobinages récepteurs n'est pas limité à un ou deux. Par ailleurs, le nombre de bobinages émetteurs n'est pas nécessairement identique au nombre de bobinages récepteurs.

## Revendications

1. Détecteur de métaux portatif adapté pour la détection d'articles métalliques dangereux portés par des individus au niveau de leurs chaussures et chaussettes, par exemple lors de l'accès à une salle d'embarquement dans un aéroport, comprenant un boîtier (120) qui loge un bobinage (122) émetteur/récepteur, le boitier (122) étant prolongé par une poignée (130) de préhension et manipulation, et un processeur (140) qui est adapté pour alimenter une boucle du bobinage (122) pour générer un champ magnétique et pour détecter les perturbations du champ magnétique provoquées par l'environnement, **caractérisé par le fait que** le détecteur comprend un capteur (150) permettant de détecter une orientation du détecteur en position verticale de la poignée (130) et pour activer, lorsque le détecteur est en position verticale, un mode seul de détection dynamique du bobinage (122) dans lequel le processeur (140) est configuré pour ignorer es perturbations environnementales dues au ferraillage du sol support qui restent constantes sur une plage de temps défini, alors que lorsque le détecteur est dans une autre position, il est configuré pour activer un mode de fonctionnement statique et dynamique du bobinage dans lequel le détecteur prend en compte l'ensemble des perturbations détectées.

2. Détecteur selon la revendication 1, **caractérisé en ce que** le bobinage (122) comprend un bobinage multipolaire.

3. Détecteur selon l'une des revendications 1 ou 2, **caractérisé en ce que** le bobinage (122) comprend deux boucles élémentaires (124, 126) placées électriquement en série et enroulées dans des sens opposés de sorte que les perturbations identiques provoquées simultanément sur chaque bobine élémentaire, se compensent et s'annulent en sortie du bobinage (122).

## Patentansprüche

1. Tragbarer Metalldetektor, der zur Detektion von gefährlichen metallischen Artikeln angepasst ist, die von Individuen im Bereich von deren Schuhen und Socken, beispielsweise beim Betreten einer Abflughalle in einem Flughafen getragen werden, umfassend ein Gehäuse (120), welches eine Sender-/Empfängerspule (122) aufnimmt, wobei das Gehäuse (122) durch einen Handgriff (130) zum Ergreifen und Handhaben verlängert ist, und einen Prozessor (140), der angepasst ist, um eine Schleife der Spule (122) zu versorgen, um ein Magnetfeld zu erzeugen und um die Störungen des Magnetfeldes zu detektieren, die durch die Umgebung hervorgerufen werden, **dadurch gekennzeichnet, dass** der Detektor einen Sensor (150) umfasst, der es ermöglicht, eine Ausrichtung des Detektors in vertikaler Position des Handgriffes (130) zu detektieren, und um, wenn der Detektor in vertikaler Position ist, einen Modus nur zum dynamischen Detektieren der Spule (122) zu aktivieren, bei dem der Prozessor (140) konfiguriert ist, um die Umgebungsstörungen aufgrund der Bewehrung der Bodenplatte zu ignorieren, die über einen definierten Zeitraum hinweg konstant bleiben, während, wenn sich der Detektor in einer anderen Position befindet, er konfiguriert ist, um einen statischen und dynamischen Betriebsmodus der Spule zu aktivieren, bei dem der Detektor die Gesamtheit aller detektierten Störungen berücksichtigt.

2. Detektor nach Anspruch 1, **dadurch gekennzeichnet, dass** die Spule (122) eine mehrpolige Spule umfasst.

3. Detektor nach einem der Ansprüche 1 oder 2, **dadurch gekennzeichnet, dass** die Spule (122) zwei Elementarschleifen (124, 126) umfasst, die elektrisch in Reihe platziert sind, und in einer entgegengesetzten Richtung gewickelt sind, sodass die identischen Störungen, die gleichzeitig an jeder Elementarschleife hervorgerufen werden, einander am Ausgang der Spule (122) ausgleichen und aufheben.

## Claims

1. A portable metal detector adapted for detection of dangerous metallic items carried by individuals in their shoes and socks, for example during access to a departure lounge in an airport, comprising a casing (120) which houses a transmitter/receiver winding (122), the casing (122) being extended by a gripping and handling handle (130), and a processor (140) which is adapted to feed a loop of the winding (122) to generate a magnetic field and to detect perturbations of the magnetic field caused by the environment, **characterised in that** the detector comprises a sensor (150) for detecting an orientation of the detector in a vertical position of the handle (130) and, when the detector is in a vertical position, to activate a single dynamic detection mode of the winding (122), wherein the processor (140) is configured to ignore the environmental perturbations due to rebar in the supporting floor which remain constant over a defined time range, whereas when the detector is in another position it is configured to activate a static and dynamic operating mode of the winding wherein the detector takes into account all the perturbations detected.

2. The detector according to Claim 1, **characterised in that** the winding (122) comprises multipolar winding.

3. The detector according to one of Claims 1 or 2, **characterised in that** the winding (122) comprises two elementary loops (124, 126) placed electrically in series and wound in opposite directions such that identical perturbations caused simultaneously on each elementary coil are compensated and cancelled at the output of the winding (122).
